# EUROPEAN PATENT APPLICATION

(11) **EP 4 700 534 A1**
(43) Date of publication of application: **25.02.2026**
(21) Application number: 25196054.8
(22) Date of filing: 14.08.2025
(51) Int. Cl.: G06F 1/16, G06F 3/041

(54) **DISPLAY DEVICE**

(30) Priority: 19.08.2024 CN 202411137139
(71) Applicant: TPK Advanced Solutions Inc., Xiamen Fujian (CN)
(72) Inventor: LIU, Sheng Fa, Taoyuan City (TW); LUO, Jian Xing, Nanping City (CN); DAI, Kai Lun, Zhangzhou City (CN); LEE, Chin Hui, Taipei City (TW); HSIAO, Po Yu, Taoyuan City (TW)
(74) Representative: Goddar, Heinz J.

(57) **Abstract**

A display device includes a cover plate and a reflective display. The cover plate has a first main surface and a second main surface opposite to each other. The first main surface has a platform region and a recessed region that is recessed relative to the platform region. The recessed region includes a plurality of microstructures. The microstructures of the first type have a depth of at least 1 µm and less than 2 µm relative to the platform region. The microstructures of a second type have a depth of at least 2 µm and less than 3 µm relative to the platform region. The microstructures of a third type have a depth of at least 3 µm and less than 5 µm relative to the platform region. The reflective display is disposed on a side of the second main surface.

## Description

### [FIELD OF DISCLOSURE]

The present disclosure relates to a display device.

### [DESCRIPTION OF RELATED ART]

The surface of a digital writing tablet needs to have a certain degree of roughness to provide haptic feedback required while writing. For writing tablet products that use liquid-crystal displays (LCDs), the surface characteristics need to account not only for the writing feel, but also for visual performance, especially when the surface particles vary in size, which can easily affect display effect. When product developers apply their experience from developing LCD writing tablets to the design principles of electronic paper display (EPD) writing devices, they often adopt the concept of uniformly arranged surface microstructures.

For example, Chinese Patent No. CN113754310 discloses a method for manufacturing cover glass for e-book screens and its application, aiming to produce a surface structure with uniformly distributed particles that can provide a smooth writing experience. Such surface characteristics, featuring uniform particle size and distribution, can provide a smooth writing experience. However, despite the availability of various writing devices on the market claiming to provide 'paper-like' properties, they often fail to truly replicate the texture of real paper.

In addition, standard measurement methods are typically used to evaluate surface roughness. For example, U.S. Patent Application No. US20230273641 discloses a glass cover having a paper-like reading and writing feel, with the paper-like effect characterized according to standard measurement methods, such as ISO4278:1997. However, experimental results have shown that even when samples fall within the same specification range as measured by the above standard method, noticeable differences in writing feel may still exist. This indicates that the standard measure methods described above are not fully capable of reflecting whether the surface can truly replicate the tactile sensation of writing on paper.

Accordingly, how to provide a display device capable of addressing the above-mentioned problems has become one of the issues to which the industry is eager to devote research and development efforts.

### [SUMMARY]

In view of the foregoing, one objective of the present disclosure is to provide a display device capable of addressing the aforementioned problems.

To achieve the aforementioned objective, a display device comprising a cover plate and a reflective display according to claim 1 is provided. The cover plate has a first main surface and a second main surface opposite to each other. The first main surface comprises a platform region and a recessed region that is recessed relative to the platform region. The recessed region comprises a plurality of microstructures. A first-type of the plurality of microstructures has a depth of at least 1 µm and less than 2 µm relative to the platform region. A second-type of the plurality of microstructures has a depth of at least 2 µm and less than 3 µm relative to the platform region. A third-type of the plurality of microstructures has a depth of at least 3 µm and less than 5 µm relative to the platform region. The reflective display is disposed on a side of the second main surface. A writing path of approximately 200 µm on the first main surface traverses at least two of the first-type, the second-type, or the third-type of the plurality of microstructures. The platform region continuously extends for at least approximately 100 µm on the first main surface.

In one or more embodiments of the present disclosure, a height variation of the platform region in a direction perpendicular to the first main surface is less than 1 µm.

In one or more embodiments of the present disclosure, each of the plurality of microstructures is spaced from its nearest neighboring microstructure by a center-to-center distance. An average value of the center-to-center distances between the microstructures is from approximately 90 µm to approximately 100 µm. A difference between a maximum value and a minimum value of the center-to-center distances is from approximately 120 µm to approximately 140 µm.

In one or more embodiments of the present disclosure, the maximum value of the center-to-center distances is from approximately185 µm to approximately 195 µm, and the minimum value of the center-to-center distances is from approximately 55 µm to approximately 65 µm.

In one or more embodiments of the present disclosure, each of the plurality of microstructures is spaced from its nearest neighboring microstructure by a center-to-center distance. An average value of the center-to-center distances is from approximately90 µm to approximately 100 µm. A standard deviation of the center-to-center distances is from approximately 35 µm to approximately 40 µm.

In one or more embodiments of the present disclosure, each of the plurality of microstructures is spaced from its nearest neighboring microstructure by a center-to-center distance. An average value of the center-to-center distances is from approximately90 µm to approximately 100 µm, and a coefficient of variation of the center-to-center distances is from approximately 35% to approximately 40%.

In one or more embodiments of the present disclosure, each of the plurality of microstructures has a footprint area. An average value of the footprint areas of the plurality of microstructures is from approximately7400 µm² to approximately 7450 µm². A difference between a maximum value and a minimum value of the footprint area is from 19250 µm² to approximately 19350 µm².

In one or more embodiments of the present disclosure, the maximum value of the footprint areas is from approximately 19550 µm² to approximately 19600 µm², and the minimum value of the footprint areas is from approximately 250 µm² to approximately 300 µm².

In one or more embodiments of the present disclosure, each of the plurality of microstructures has a footprint area. An average value of the footprint areas of the plurality of microstructures is from approximately 7400 µm² to approximately 7450 µm², and a standard deviation of the footprint areas is from approximately 6200 µm² to approximately 6250 µm².

In one or more embodiments of the present disclosure, each of the plurality of microstructures has a footprint area. An average value of the footprint areas of the plurality of microstructures is from approximately 7400 µm² to approximately 7450 µm², and a coefficient of variation of the footprint areas is from approximately 80% to approximately 85%.

In summary, in the display device of the present disclosure, by configuring the first main surface of the cover plate such that a writing path of a specific length traverses at least two different types of microstructures, the non-uniformity in microstructure depth can be increased. In addition, by designing the platform region to continuously extend a specific length on the first main surface, the areas without microstructures are ensured to be relatively larger and more continuous. As such, the first main surface can simulate the surface properties of natural materials (e.g., paper fibers) through the randomness in the microstructure distribution, thereby providing a writing experience that authentically mimics the texture of real paper.

The foregoing description serves to illustrate the problems intended to be addressed by the present disclosure, the technical means for solving those problems, and the resulting technical effects. The specific details of the present disclosure will be further elaborated upon in the embodiments and corresponding drawings provided below.

### [BRIEF DESCRIPTION OF THE DRAWINGS]

The accompanying drawings are provided to make the above and other objectives, features, advantages, and embodiments of the present disclosure more readily understood. A brief description of the drawings is as follows:
Fig. 1 is a schematic diagram illustrating an electronic device according to one embodiment of the present disclosure.
Fig. 2 is a partial top view illustrating the contour of a cover plate according to one embodiment of the present disclosure.
Fig. 3 is a surface profile view taken along a writing path in Fig. 2.
Fig. 4 is a schematic diagram illustrating a method for manufacturing a cover plate according to one embodiment of the present disclosure.
Fig. 5 is a partial top view illustrating the contour of the cover plate in a comparative example.

### [DETAILED DESCRIPTION]

A plurality of embodiments of the present disclosure will be disclosed with reference to the accompanying drawings. For clarity of explanation, numerous practical details will be includes in the following descriptions. However, it should be understand that these practical details are not intended to limit the present disclosure. In other words, in certain embodiments of the present disclosure, such practical details may not be necessary. Furthermore, for the sake of simplifying the drawings, certain conventional structures and components are illustrated in a simplified schematic manner.

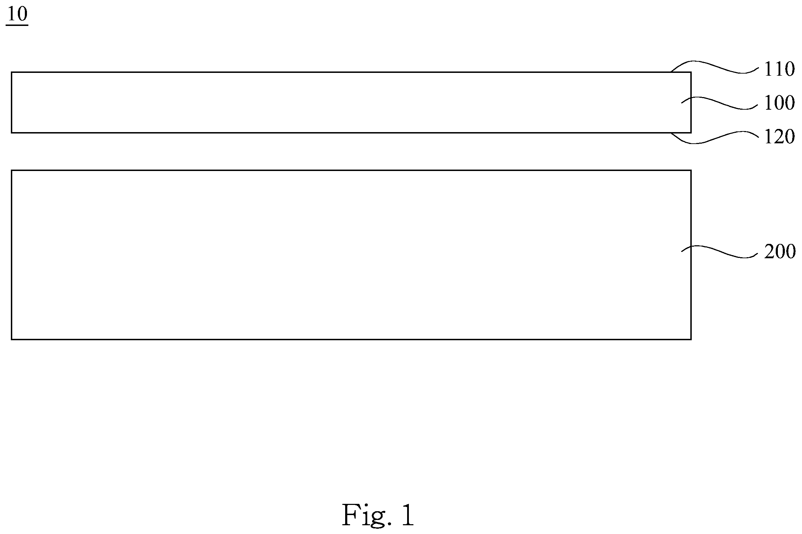

Please refer to Fig. 1, which is a schematic diagram illustrating an electronic device of one embodiment of the present disclosure. As shown in Fig. 1, the display device 10 includes a cover plate 100 and a reflective display 200. The cover plate 100 has a first main surface 110 and a second main surface 120 opposite to each other. The reflective display 200 is disposed on a side of the second main surface 120. The reflective display 200 is a display that utilizes ambient light to display images. An operating principle of the reflective display 200 involves ambient light illuminating the display panel, and the reflective layer on the display panel reflects the light toward the eyes of a viewer. The reflective display 200 offers the following advantages: (1) Since the reflective display 200 does not require a backlight module, both the volume/thickness and weight can be effectively reduced, while also offering better power efficiency and durability; and (2) the reflective display 200 provides better visibility under sunlight compared to transmissive displays and can use ambient light to display images, making it suitable for reading even under sunlight.

The reflective display 200 may be used in, for example: (1) electronic readers, which are used for extended reading sessions and benefit from the power-saving characteristics of the reflective display 200; (2) outdoor displays, which are often used in sunlight and achieve better visibility with the reflective display 200; and (3) wearable devices, which are worn for long durations and can operate more efficiently due to the power-saving features of the reflective display 200.

Types of reflective display 200 include: (1) electronic paper displays (EPDs), which are based on microcapsule technology and composed of small ink capsules that change color when an electric field is applied; and (2) reflective liquid crystal displays (R-LCDs), which are reflective displays based on liquid crystal technology. Since both types use external light sources to illuminate the display screen, both types are more energy-efficient than conventional backlit LCDs and suitable for use in bright environments.

In some embodiments, the cover plate 100 and the reflective display 200 may be bonded via, for example, an optical clear adhesive (OCA), although the present disclosure is not limited thereto. In some embodiments, a touch module (not shown) may be additionally disposed between the cover plate 100 and the reflective display 200 to enable a touch function. In some embodiments, a light guide module (not shown) may be additionally disposed between the cover plate 100 and the reflective display 200 to enable a front light function.

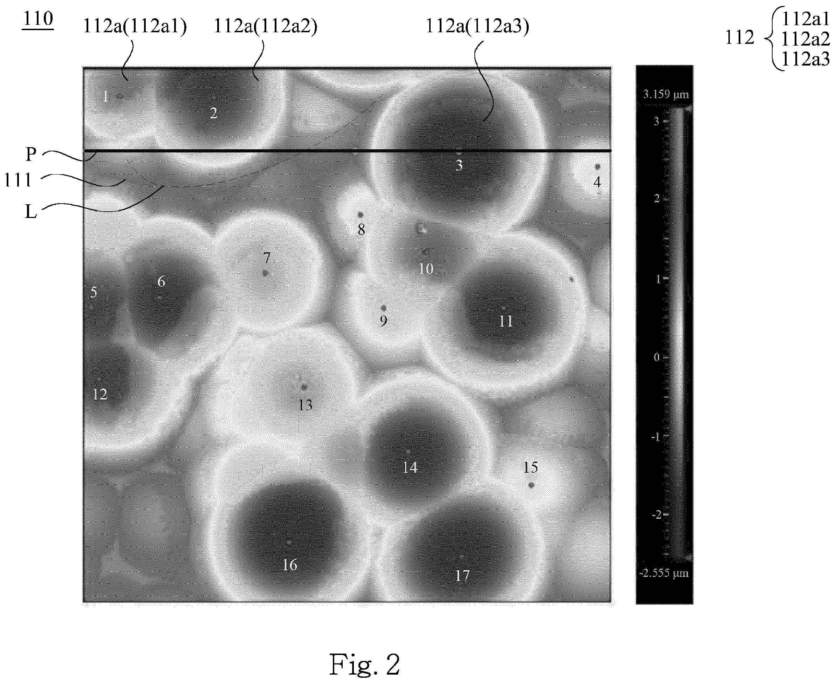

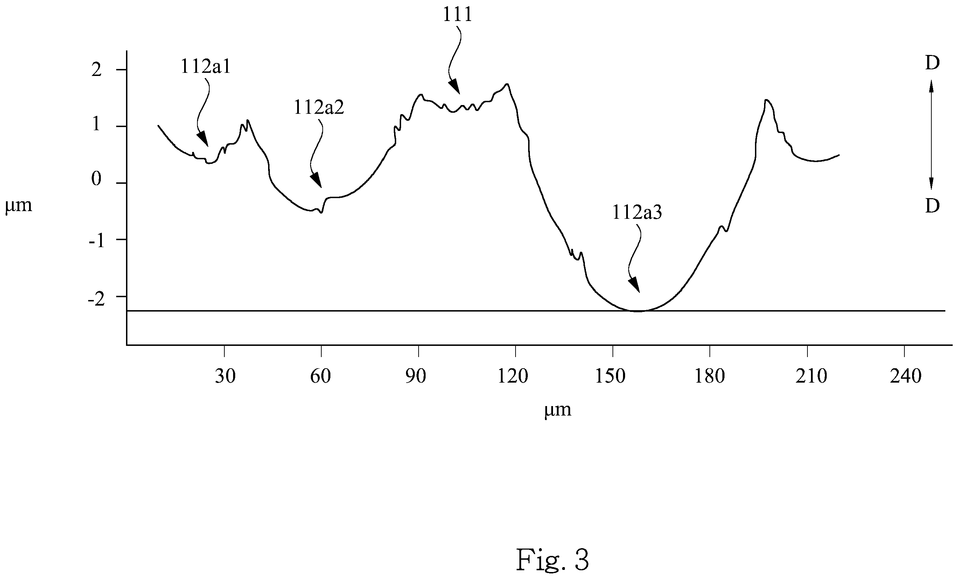

Please refer to Fig. 2 and Fig. 3. Fig. 2 is a partial top view illustrating the contour of a cover plate 100 according to one embodiment of the present disclosure. Fig. 3 is a surface profile view taken along a writing path P in the Fig. 2. Specifically, the image shown in Fig. 2 is the output of a measurement performed using white light interferometry (WLI). White light interferometry is a non-contact type of three-dimensional (3D) optical measurement instrument and is a type of optical profiler (OP) capable of performing roughness analysis of samples. The main principle of the white light interferometer lies in utilizing the low coherence property of white light. Light reflected from the object and light reflected from the reference surface pass through a beam splitter to generate interference fringes, from which the surface profile height is determined based on the phase difference. In the present embodiment, a commercially available white light interferometer may be used, such as the ZYGO NV8300 system, along with its proprietary ZYGO Mx software. Alternatively, the measurement results obtained by the white light interferometer may be exported for analysis using other image analysis software, such as OpenCV, or may be processed by other image analysis methods. However, the present disclosure is not limited thereto.

As shown in Fig. 2 and Fig. 3, the first main surface 110 of the cover plate 100 has a platform region 111 and a recessed region 112 recessed relative to the platform region 111. The recessed region 112 comprises a plurality of microstructures 112a, which may be classified into a first type, a second type, and a third type. Specifically, the first-type microstructures 112a1 have a depth of at least 1 µm and less than 2 µm relative to the platform region 111. The second-type microstructures 112a2 have a depth of at least 2 µm and less than 3 µm relative to the platform region 111. The third-type microstructures 112a3 have a depth of at least 3 µm and less than 5 µm relative to the platform region 111. Among them, the total footprint area of the platform region 111 accounts for approximately 7.9% of the overall field of view area. The total footprint area of the first-type microstructures 112a1 accounts for approximately 5.0% of the overall field of view area, that of the second-type microstructures 112a2 accounts for approximately 28.2% of the overall field of view area, and that of the third-type microstructures 112a3 accounts for approximately 58.9% of the overall field of view area.

Notably, as shown in Fig. 2, the microstructures 112a traversed by a writing path P of approximately 200 µm on the first main surface 110 comprise at least two of the first type, the second type, or the third type. This configuration increases the non-uniformity in depth of the microstructures 112a.

More specifically, the contour image shown in Fig. 2 covers an area of approximately 243 µm x 243 µm (i.e., the writing path P is also approximately 243 µm in length). As shown in Fig. 3, the writing path P simultaneously traverses the first-type microstructures 112a1, the second-type microstructures 112a2, and the third-type microstructures 112a3. In practical applications, the writing path P of approximately 200 µm may traverse only two of the three types of microstructures - for example, the writing path P may traverse only the first-type microstructures 112a1 and the second-type microstructures 112a2, only the second-type microstructures 112a2 and the third-type microstructures 112a3, or only the first-type microstructures 112a1 and the third-type microstructures 112a3.

Additionally, as shown in Fig. 2, the platform region 111 has a continuous length of at least approximately 100 µm on the first main surface 110. This ensures that a relatively large and continuous area of the first main surface 110 remains free of microstructures 112a.

Specifically, the platform region 111 extends beyond a dash line segment L shown in Fig. 2, which has a length of approximately 140 µm.

In some embodiments, the height variation of the platform region 111 along a direction D perpendicular to the first main surface 110 is less than 1 µm. This indicates that the platform region 111 is flatter than the recessed region 112, which contains microstructures 112a with varying depths.

With the aforementioned structural configuration, the first main surface 110 of the cover plate 110 can utilize the randomness in the distribution of the microstructures 112a to stimulate the surface properties of natural materials (e.g., paper fibers), thereby providing a writing experience that authentically mimics of the texture of real paper. More specifically, the continuous platform region 111 can stimulate the fibrous texture of wood pulp-based paper, while the microstructures 112a with varying depths in the recessed region 112 can simulate the gaps between wood fibers in paper.

To impart a certain degree of randomness (i.e., non-uniformity) to the microstructures 112a on the first main surface 110 of the cover plate 100, the distances between the microstructures 112a may be constrained in the following embodiments.

In some embodiments, each of the microstructures 112a is spaced from its nearest neighboring microstructure 112a by a center-to-center distance. The average value of the center-to-center distances of the microstructures 112a is from approximately 90 µm to approximately 100 µm, and the difference between the maximum value and the minimum value of the center-to-center distances is from approximately 120 µm to approximately 140 µm. In some embodiments, the maximum value of the center-to-center distance is from approximately 185 µm to approximately 195 µm, and the minimum value of the center-to-center distance is from approximately 55 µm to approximately 65 µm.

In some embodiments, the average value of the center-to-center distances of the microstructures 112a is approximately 90 µm to approximately 100 µm, and the standard deviation of the center-to-center distances is approximately 35 µm to approximately 40 µm.

In some embodiments, the average value of the center-to-center distances of the microstructures is approximately 90 µm to approximately 100 µm, and the coefficient of variation of the center-to-center distances is approximately 35% to approximately 40%.

As shown in Fig. 2, the center points of seventeen microstructures 112a on the first main surface 110 are marked and sequentially numbered. The center-to-center distance of each of the microstructure 112a and its nearest microstructure 112a is detailed in Table 1 below.

**Table 1**

| Microstructure No. | Nearest Microstructure No. | Center-to-center Distance (µm) |
|---|---|---|
| 1(2) | 2(1) | 78.75 |
| 3(4) | 4(3) | 113.07 |
| 5(6) | 6(5) | 59.58 |
| 7 | 6 | 92.79 |
| 8 | 10 | 63.16 |
| 9(10) | 10(9) | 66.37 |
| 11 | 10 | 87.87 |
| 12 | 5 | 62.75 |
| 13 | 9 | 94.83 |
| 14 | 13 | 106.13 |
| 15(17) | 17(15) | 190.73 |
| 16 | 14 | 128.27 |

According to the data in Table 1, the average value of the center-to-center distances of the seventeen microstructures 112a is calculated to be 95.36 µm. The difference between the maximum value and the minimum value is 131.15 µm. The maximum value of the center-to-center distance is 190.73 µm, and the minimum value of the center-to-center distance is 59.58 µm. The standard deviation of the center-to-center distances is 37.13 µm, and the coefficient of variation of the center-to-center distances is 38.94%.

Additionally, to impart a certain degree of randomness (i.e., non-uniformity) to the microstructures 112a on the first main surface 110 of the cover plate 100, the following constraints may be applied to the footprint areas of the microstructures 112a. The footprint area may be defined, for example, as the orthographic projection area of the microstructure 112a relative to the first main surface 110.

In some embodiments, the average value of the footprint area of the microstructures 112a ranges from approximately 7400 µm² to approximately 7450 µm². The difference between the maximum value and the minimum value of the footprint areas of the microstructures 112a ranges from approximately 19250 µm² to approximately 19350 µm². In some embodiments, the maximum value of the footprint area of the microstructures 112a ranges from approximately 19550 µm² to approximately 19600 µm², and the minimum value of the footprint area of the microstructures 112a ranges from approximately 250 µm² to approximately 300 µm².

In some embodiments, the average value of the footprint area of the microstructures 112a ranges from approximately 7400 µm² to approximately 7450 µm², and the standard deviation of the footprint area of the microstructures 112a ranges from approximately 6200 µm² to approximately 6250 µm².

In some embodiments, the average value of the footprint area of the microstructures 112a ranges from approximately 7400 µm² to approximately 7450 µm², and the coefficient of the variation of the footprint areas of the microstructures 112a ranges from approximately 80% to approximately 85%.

As shown in Fig. 2, the footprint area data of some randomly selected microstructures 112a are detailed in Table 2 below.

**Table 2**

| Microstructure No. | Footprint Area (µm²) |
|---|---|
| 1 | 3595.08 |
| 2 | 9986.34 |
| 3 | 19573.22 |
| 4 | 1597.81 |
| 7 | 6391.26 |
| 8 | 575.21 |
| 9 | 898.77 |
| 10 | 6391.26 |
| 11 | 14380.33 |
| 13 | 6391.26 |
| 14 | 12083.47 |
| 15 | 255.65 |
| 16 | 14380.33 |

According to the data in Table 2, the average value of the footprint area of the microstructure 112a is calculated to be 7423.08 µm. The difference between the maximum value and the minimum value of the footprint area is 19317.57 µm². The maximum value of the footprint area is 19573.22 µm². The minimum value of the footprint area is 255.65 µm². The standard deviation of the footprint area is 6227.19 µm², and the coefficient of variation of the footprint area is 83.89%.

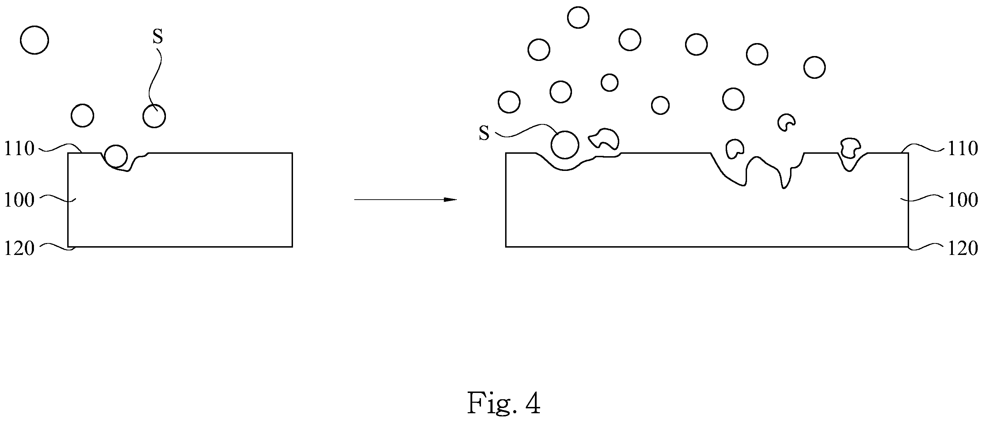

Please refer to Fig. 4, which is a schematic diagram illustrating a method for manufacturing the cover plate 100 according to one embodiment of the present disclosure. As shown in Fig. 4, the cover plate 100 of this embodiment may be made of a material such as glass. The first main surface 110 of the cover plate 100, having a platform region 111 and a region area 112, may be processed by a sandblasting process (also known as bead blasting). The sandblasting process uses high-pressure gas to propel fine abrasive particles S (such as aluminum oxide sand or silicon carbide sand) toward the first main surface 110 of the cover plate 110, causing the surface to form pit-like microstructures 112a resembling granules. This produces a layered, sculpture-like effect with varying depths. For example, the particle size of the abrasive material S may be approximately 50 µm or less, although the present disclosure is not limited thereto. In some embodiments, the abrasive particles may be spherical, ellipsoidal, polygonal pyramidal-shaped, irregularly shaped with sharp edges, or irregularly shaped with smooth edges. In some embodiments, the abrasive particles are generally spherical.

After the sandblasting process, an etching process may be subsequently performed on the first main surface 110 to further smooth the surface by rinsing with an etching solution (i.e., reducing the surface roughness to a level that simulates the fibrous texture of wood pulp-based paper). For example, the etching solution used in the etching process may be hydrofluoric acid (HF), through the present disclosure is not limited thereto.

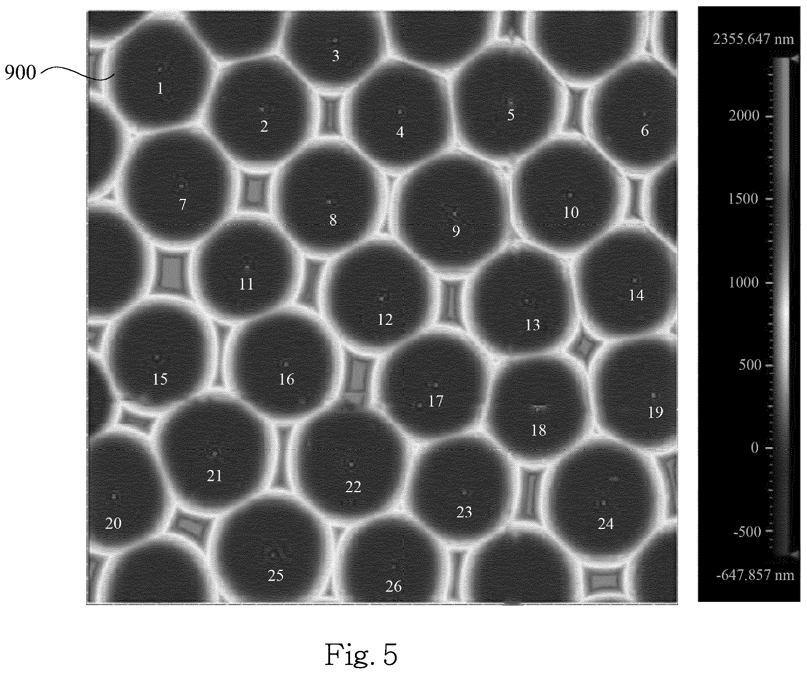

Please refer to Fig. 5, which is a partial top view contour image of a cover plate of a comparative example. As shown in Fig. 5, the surface of the comparative example cover plate is formed using a photolithography process with a photomask. The microstructures 900 on a surface of the comparative example cover plate are more uniformly distributed, and the area without microstructures 900 is relatively small and mostly discontinuous.

As shown in Fig. 5, the center points of twenty-six microstructures 900 on the surface of the comparative example cover plate are labeled and sequentially numbered. The center-to-center distances between each of the microstructures 900 and their nearest microstructure 900 are detailed in Table 3 below.

**Table 3**

| Microstructure No. | Nearest Microstructure No. | Center-to-center Distance (µm) |
|---|---|---|
| 1 | 2 | 69.77 |
| 2 | 3 | 61.28 |
| 3 | 4 | 56.87 |
| 4(8) | 8(4) | 69.29 |
| 5 | 10 | 68.92 |
| 6 | 10 | 70.38 |
| 7 | 1 | 71.27 |
| 9 | 4 | 73.74 |
| 10 | 14 | 68.92 |
| 11(16) | 16(11) | 70.23 |
| 12 | 17 | 70.51 |
| 13(18) | 18(13) | 66.91 |
| 14 | 13 | 68.43 |
| 15 | 21 | 77.03 |
| 17 | 18 | 62.42 |
| 20(21) | 21(20) | 69.45 |
| 22 | 26 | 79.80 |
| 23 | 26 | 71.12 |

According to the data in Table 3, the average value of the center-to-center distances of the twenty-six microstructures 900 is calculated to be 69.24 µm. The difference between the maximum value and the minimum value is 10.56 µm. The maximum center-to-center distance is 77.03 µm, and the minimum center-to-center distance is 56.87 µm. The standard deviation of the center-to-center distances is 5.13 µm, and the coefficient of variation of the center-to-center distances is 7.00%. These results indicate that the degree of randomness (i.e., non-uniformity) of the microstructures 900 on the surface of the comparative example cover plate is significantly lower than that of the microstructures 112a on the first main surface 110 of the present embodiment. Accordingly, the comparative example cover plate is unable to provide a writing experience that authentically simulates the texture of paper.

As shown in Fig. 5, the footprint areas data of some randomly selected microstructures 900 is listed in Table 4 below.

**Table 4**

| Microstructure No. | Footprint Area (µm²) |
|---|---|
| 1 | 1598.98 |
| 2 | 4150.58 |
| 3 | 4598.98 |
| 4 | 4598.98 |
| 7 | 4598.98 |
| 8 | 4598.98 |
| 9 | 5070.38 |
| 10 | 4371.91 |
| 11 | 4598.98 |
| 13 | 3725.18 |
| 14 | 3322.77 |
| 15 | 4598.98 |
| 16 | 4150.58 |
| 17 | 4150.58 |
| 18 | 4150.58 |
| 19 | 3725.18 |
| 20 | 4831.81 |
| 21 | 3935.00 |
| 22 | 4150.58 |
| 23 | 4598.98 |
| 24 | 4598.98 |
| 25 | 4598.98 |
| 26 | 3521.10 |

According to the data in Table 4, the average footprint area of the microstructures 900 is calculated to be 4309.00 µm. The difference between the maximum value and minimum value is 1005.7 µm². The maximum footprint area is 5070.38 µm², and the minimum footprint area is 3322.77 µm². The standard deviation of the footprint area is 490.20 µm², and the coefficient of variation of the footprint area is 11.38%. These results also indicated that the degree of randomness (i.e., non-uniformity) of the microstructures 900 on the surface of the comparative example cover plate is significantly lower than that of the microstructures 112a on the first main surface 110 of the present embodiment. Accordingly, the comparative example cover plate is similarly unable to provide a writing experience that authentically simulates the texture of paper.

From the above detailed description of the embodiment of the present disclosure, it is evident that, in the display device of the present disclosure, by configuring the first main surface of the cover plate such that a writing path of a specific length traverses at least two different types of microstructures, the non-uniformity in microstructure depth can be increased. Additionally, by designing the platform region to continuously extend a specific length on the first main surface, the area without microstructures is ensured to be relatively larger and more continuous. As such, the first main surface can simulate the surface properties of natural materials (e.g., paper fibers) through the randomness in microstructure distribution, thereby providing a writing experience that authentically mimics the texture of real paper.

Although the embodiments of the present disclosure have been described above, they are not intended to limit the scope of the present disclosure. Various modifications and alternations can be made by those skilled in the art without departing from the spirit and scope of the present disclosure. The scope of protection of the present disclosure shall be defined by the appended claims.

### [COMPONENT SYMBOL]

10: Display device
100: Cover plate
110: First main surface
111: Platform region
112: Recessed region
112a, 112a1, 112a2, 112a3, 900: Microstructure
120: Second main surface
200: Reflective display
D: Direction
L: Line segment
P: Writing path
S: Abrasive particle

## Claims

1. A display device (10), comprising:
a cover plate (100), having a first main surface (110) and a second main surface (120) opposite to each other, the first main surface (110) comprising a platform region (111) and a recessed region (112) recessed relative to the platform region (111), the recessed region (112) comprising a plurality of microstructures (112a, 900), wherein
a first-type (112a1) of the plurality of microstructures has a depth of at least 1 µm and less than 2 µm relative to the platform region;
a second-type (112a2) of the plurality of microstructures has a depth of at least 2 µm and less than 3 µm relative to the platform region; and
a third-type (112a3) of the plurality of microstructures has a depth of at least 3 µm and less than 5 µm relative to the platform region; and
a reflective display (200) disposed on one side of the second main surface (120);
wherein a writing path (P) of approximately 200 µm on the first main surface (110) traverses at least two of the first-type, the second-type, and the third-type of the plurality of microstructures (112a1, 112a2, 112a3); and
wherein the platform region (111) continuously extends for at least approximately 100 µm on the first main surface (110).

2. The display device of Claim 1, wherein a height variation of the platform region (111) in a direction (D) perpendicular to the first main surface (110) is less than 1 µm.

3. The display device of Claim 1 or 2, wherein each of the plurality of microstructures is spaced from its nearest neighboring microstructure by a center-to-center distance, an average value of the center-to-center distances is from approximately 90 µm to approximately 100 µm, and a difference between a maximum value and a minimum value of the center-to-center distances is from approximately 120 µm to approximately 140 µm.

4. The display device of Claim 3, wherein the maximum value is from approximately 185 µm to approximately 195 µm, and the minimum value is from approximately 55 µm to approximately 65 µm.

5. The display device of any of the preceding Claims, wherein each of the plurality of microstructures is spaced from its nearest neighboring microstructure by a center-to-center distance, an average value of the center-to-center distances is from approximately 90 µm to approximately 100 µm, and a standard deviation of the center-to-center distances is from approximately 35 µm to approximately 40 µm.

6. The display device of any of the preceding Claims, wherein each of the plurality of microstructures is spaced from its nearest neighboring microstructure by a center-to-center distance, an average value of the center-to-center distances is from approximately 90 µm to approximately 100 µm, and a coefficient of variation of the center-to-center distances is from approximately 35% to approximately 40%.

7. The display device of any of the preceding Claims, wherein each of the plurality of microstructures has a footprint area, an average value of the footprint areas is from approximately 7400 µm² to approximately 7450 µm², and a difference between a maximum value and a minimum value of the footprint area is from approximately 19250 µm² to approximately 19350 µm².

8. The display device of Claim 7, wherein the maximum value is from approximately 19550 µm² to approximately 19600 µm², and the minimum value is from approximately 250 µm² to approximately 300 µm².

9. The display device of any of the preceding Claims, wherein each of the plurality of microstructures has a footprint area, an average value of the footprint areas is from approximately 7400 µm² to approximately 7450 µm², and a standard deviation of the footprint areas is from approximately 6200 µm² to approximately 6250 µm².

10. The display device of any of the preceding Claims, wherein each of the plurality of microstructure has a footprint area, an average value of the footprint areas is from approximately 7400 µm² to approximately 7450 µm², and a coefficient of variation of the footprint areas is from approximately 80% to approximately 85%.
